# EUROPÄISCHE PATENTSCHRIFT

(11) **EP 0 842 005 B1**
(45) Veröffentlichungstag und Bekanntmachung des Hinweises auf die Patenterteilung: **25.09.2002**
(21) Anmeldenummer: 96919536.1
(22) Anmeldetag: 07.05.1996
(51) Int. Cl.: B23B 27/14

(54) **POLYGONALER SCHNEIDEINSATZ**
POLYGONAL CUTTING INSERT
PLAQUETTE DE COUPE POLYGONALE

(30) Priorität: 05.08.1995 DE 19528851
(43) Veröffentlichungstag der Anmeldung: 20.05.1998
(73) Patentinhaber: Widia GmbH, 45145 Essen (DE)
(72) Erfinder: AGUSTIN PAYA, José, D-45479 Mülheim (DE); RETZKOWSKI, Dirk, D-45884 Gelsenkirchen (DE); RÖDIGER, Klaus, D-44869 Bochum (DE)
(74) Vertreter: Vomberg, Friedhelm, Dipl.-Phys.
(86) Internationale Anmeldenummer: DE9600844
(87) Internationale Veröffentlichungsnummer: WO97005981

(56) Entgegenhaltungen:
- EP-A- 0 160 278
- DE-A- 2 814 621
- DE-A- 4 014 840
- DE-A- 4 136 417
- DE-A- 4 416 651

## Beschreibung

Die Erfindung betrifft einen poygonalen Schneideinsatz nach dem Oberbegriff des Anspruches 1.

Einen Schneideinsatz dieser Art beschreibt die DE 44 16 651 A1, allerdings ist die Freifläche in einer senkrechten Richtung zur Schneidkante hin konkav gekrümmt.

In der EP 0 160 278 A2 wird ein solcher Schneideinsatz beschrieben und dargestellt. Dieser Schneideinsatz besitzt unterhalb der Schneidkante und im Abstand hiervon angeordnet einen bis an die Auflagefläche reichenden Freiflächenbereich, der gegenüber dem darüberliegenden Freiflächenbereich, der an die Schneidkante angrenzt, zurückgesetzt ist.

Darüber hinaus sind Schneideinsätze, insbesondere rhombische Schneideinsätze mit spitzen Schneidecken bekannt, die auf der Freifläche im Abstand von der Schneidkante unterhalb des Eckenbereiches eine durch Schleifen hergestellte zurückspringende Freifläche aufweisen. Die Übergangsbereiche zwischen zwei aneinandergrenzender Freiflächenabschnitte laufen zur Auflagefläche hin unter spitzer werdendem Winkel zusammen oder weisen einen im Querschnitt konstanten Eckenradius der Übergangsbereiche zwischen zwei Freiflächen auf.

Der Nachteil der zuvor beschriebenen Schneideinsätze liegt darin, daß die unterhalb einer Schneidecke liegende Auflagefläche des Schneideinsatzes entweder sehr kleine Eckenradien aufweist, womit die Gefahr eines Ausbrechens gegeben ist, oder bei zurückgesetzten Freiflächen-Übergangsbereichen die Auflagefläche auf Kosten der Stabilität der in einem Trägerwerkzeug eingespannten Wendeschneidplatte zu kleinflächig gestaltet ist. Soweit die Freiflächenbereiche abgeschliffen werden, entsteht ein zusätzlicher Kosten- und Arbeitsaufwand. Eckenbereiche mit kleinem Eckenradius im Bereich der Auflagefläche sind darüber hinaus preßtechnisch nur sehr schwer ausformbar.

Es ist daher Aufgabe der vorliegenden Erfindung, den eingangs genannten Schneideinsatz dahingehend zu verbessern, daß er eine verbesserte Kantenstabilität im Bereich der Freiflächenkanten, insbesondere im Übergangsbereich zweier aneinandergrenzender Freiflächen in der Nähe der Auflagefläche aufweist.

Diese Aufgabe wird durch den polygonalen Schneideinsatz nach Anspruch 1 gelöst, der erfindungsgemäß dadurch gekennzeichnet ist, daß die Breite des übergangsbereiches zwischen zwei aneinandergrenzenden Freiflächen im am die Auflagefläche angrenzenden Bereich zumindest gegenüber der Breite (B₂) darüberliegender Bereiche eine maximale Breite (B₁) aufweist.

Weiterbildungen der Erfindung sind in den Unteransprüchen beschrieben.

So kann nach einer ersten Ausführungsform die Breite des übergangsbereiches von der Spanfläche zu der Auflagefläche hin kontinuierlich zunehmen oder die Breite des Übergangsbereiches unterhalb eines Abstandes von mindestens 20 % der Schneideinsatzhöhe von der Schneidkante zur Auflagefläche in kontinuierlich und/oder stufenweise zunehmen. Weiterhin kann die Breite des Übergangsbereiches (zwei aneinandergrenzender Freiflächen) von der Spanfläche zu der Auflagefläche hin kontinuierlich zunehmen. Nach einer alternativen Ausführungsform bleibt die Breite des betreffenden Übergangsbereiches von der Spanfläche zur Auflagefläche hin zunächst konstant oder wird kleiner, bevor sie in einem daran anschließenden Bereich kontinuierlich und/oder stufenweise zunimmt. Diese Ausführungsform umfaßt auch solche Ausgestaltungen, bei denen die Breite des Übergangsbereiches nur über bestimmte Strecken kontinuierlich zur Auflagefläche hin wächst, wobei jedoch stets die Bedingung eingehalten wird, daß die Breite des übergangsbereiches im Bereich der angrenzenden Auflageflächen maximal ist.

Vorzugsweise ist die maximale Breite des Übergangsbereiches 1,1 bis 3mal, weiterhin vorzugsweise 1,1 bis 1,8mal so groß wie die minimale Breite des Übergangsbereiches. Diese minimale Breite kann entweder im an die Schneidkante angrenzenden Bereich gegeben sein, nämlich dann, wenn sich der dort angrenzende Übergangsbereich zur Auflagefläche hin verbreitert, oder im Abstand von der Schneidkante, etwa dergestalt, daß die Breite des übergangsbereiches von der Schneidkante aus in Richtung der Auflagefläche zunächst abnimmt oder konstant bleibt und erst in Richtung auf die Aufsatzfläche hin wieder zunimmt.

In einem Querschnitt senkrecht zur Freifläche bzw. dem Freiflächenabschnitt des Übergangsbereiches weist der Übergangsbereich eine Querschnittsrundung mit einem konstanten Radius auf, wobei die Querschnittsrundung tangential in die ebene angrenzende Freifläche oder diese schneidend, vorzugsweise unter Bildung eines kleineren Querschnittsradius übergeht.

Alternativ hierzu kann der Übergangsbereich auch im wesentlichen aus einer oder mehreren Fasen bestehen, die jeweils vorzugsweise an den Grenzbereichen zur nächsten Fase bzw. zur ebenen sich anschließenden Freifläche abgerundet ist bzw. sind.

Schließlich kann in einer alternativen Ausführungsform der Übergangsbereich auch in einem senkrechten Querschnitt zur betreffenden Freifläche aus zwei seitlichen konvexen und einer mittigen konkaven Rundung bestehen.

Die unterhalb der Schneidkanten liegenden Freiflächen - mit Ausnahme des Übergangsbereiches - können als jeweils ebene Flächen ausgebildet sein, sie können jedoch auch aus übereinanderliegenden Flächenebenen bestehen, die unter verschiedenen Freiwinkeln angeordnet sind. In entsprechender Weise ist dann der jeweilige Freiwinkel in den benachbarten Übergangsbereichen ausgebildet. Diese Freiwinkel liegen vorzugsweise zwischen 5° und 40°. Nach einer Weiterentwicklung der Erfindung beträgt der an die Schneidkante angrenzende Freiwinkel zwischen 5° und 10° und der an die Auflagefläche angrenzende Freiwinkel 10° bis 20°. Sofern drei übereinanderliegende Freiflächenabschnitte vorliegen, liegt der Freiwinkel des mittleren Freiflächenbereiches und/oder des Übergangsbereiches zwischen 20° und 45° bzw. er ergibt sich.

Die vorbeschriebene Ausgestaltung wird vorzugsweise bei Schneideinsätzen angewendet, bei denen mindestens eine Schneidecke spitzwinklig, vorzugsweise unter einem Eckenwinkel von ≤80° ausgebildet ist.

Der polygonale Schneideinsatz kann beliebige Spanflächengeometrien aufweisen, insbesondere kann er auf der Spanfläche Spanformnuten, an die Schneidkante angrenzende Fasen und/oder erhabene Spanformelemente besitzen. Vorzugsweise sind diese erhabenen Spanformelemente etwa in Richtung auf die Schneidecke ausgerichtet und längsrippenförmig ausgebildet. Solche erhabenen Spanbrecher werden beispielsweise in der DE 41 36 417 A1 oder der DE 43 14 570 A1 beschrieben, worauf hiermit Bezug genommen wird.

Ausführungsbeispiele der Erfindung sind in den Zeichnungen dargestellt und werden im folgenden erläutert. Es zeigen
- Fig. 1: eine perspektivische Ansicht eines rhombischen Schneideinsatzes in schematischer Darstellung,
- Fig. 2: eine Detailansicht dieses Schneideinsatzes im Bereich einer Schneidecke,
- Fig. 3: eine Seitenansicht des Teilbereiches nach Fig. 2 auf eine Freifläche,
- Fig. 4 bis Fig. 7: alternative Ausführungsformen entlang der Schnittlinie A - A, B - B oder C - C,
- Fig. 8a: eine Ansicht einer Schneidecke vertikal zur Auflagefläche, von unten,
- Fig. 8b bis 8g: jeweils Stirn- und Seitenansichten möglicher Ausführungsformen des Übergangsbereiches der Schneidkante,
- Fig. 9a bis 9d: jeweils Schneideinsätze mit drei Freiflächen- und Übergangsabschnitten, die unter verschiedenen Spanwinkeln angeordnet sind.

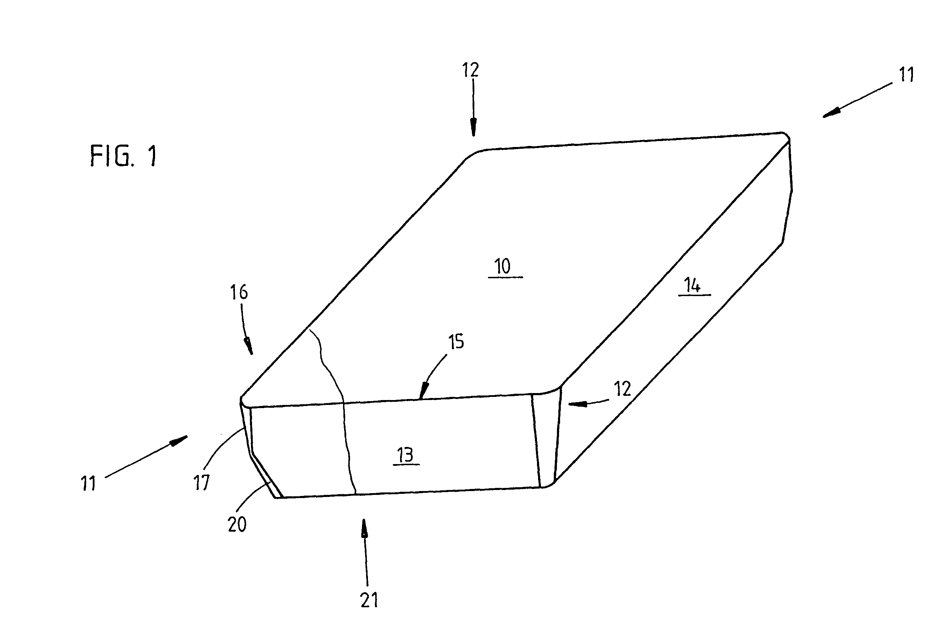

Der in Fig. 1 (ohne Spanformelemente) dargestellte Schneideinsatz hat eine rhombische Spanfläche 10 mit zwei spitzwinkligen Schneidecken 11 und zwei stumpfwinkligen Schneidecken 12. Die jeweils aneinandergrenzenden Freiflächen 13 oder 14 und die Spanfläche 10 bilden eine umlaufende Schneidkante 15. Im folgenden soll der eckennahe Abschnitt 16 eines solchen Schneideinsatzes betrachtet werden.

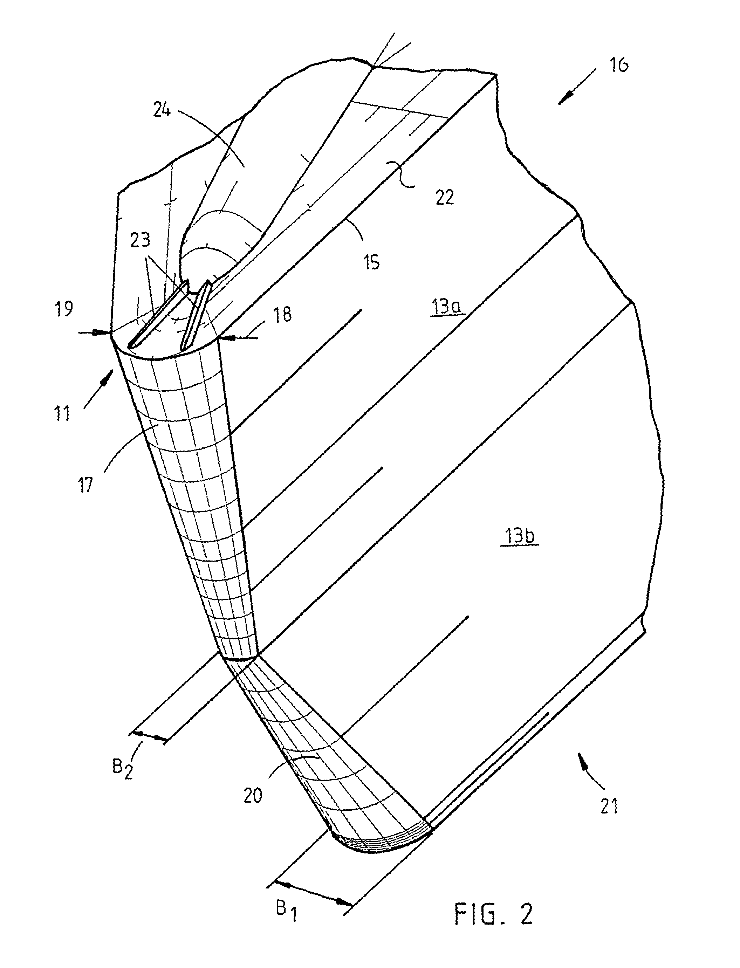

Wie das Drahtmodell nach Fig. 2 verdeutlicht, besitzt der Schneideinsatz zwei unter verschiedenen Freiflächenwinkeln übereinander angeordnete Freiflächenbereiche 13a und 13b. Die Schneidecke 11 ist abgerundet und besitzt einen im wesentlichen konstanten Eckenradius, der auch dem Kantenradius des konvex ausgebildeten Übergangsbereiches 17 in schneideckennahen Bereichen entspricht. Im oberen, an die umlaufende Schneidkante 15 angrenzenden Freiflächenabschnitt 13 bildet der Übergangsbereich 17 das Verbindungsstück zwischen zwei aufeinanderzulaufenden Freiflächenbereichen, von denen der Freiflächenbereich 13a dargestellt ist und der angrenzende Freiflächenbereich in Fig. 1 und 2 verdeckt ist. Der Abstand zwischen den Pfeilen 18 und 19 bestimmt das obere Breitenmaß dieses Übergangsbereiches. Wie Fig. 2 erkennen läßt, verringert sich die Breite dieses Übergangsbereiches 17 von einem Ursprungsmaß auf eine Breite B₂. Die Breite liegt in Höhe der Grenzlinie zwischen den Freiflächenabschnitten 13a und 13b. Unterhalb dieser Grenzlinie wächst die betreffende Breite des Freiflächenbereiches 20 bis auf das Maß B₁ an, das im Bereich der Grenze zwischen dem Übergangsbereich 20 bzw. den unteren Freiflächenabschnitten und der Auflagefläche 21 gemessen wird. In Fig. 2 ist angedeutet, daß sich an die Schneidkante eine umlaufende Nut 22 anschließen kann, welche durch erhabene rippenförmige Spanformelemente 23 überbrückt wird, die hier in bezug auf die Schneideckenwinkelhalbierenden symmetrisch liegen. Am Ende dieser Längsrippen schließt sich zu schneideckenferneren Bereichen eine breiter und höher geformte Rippe 24 an. Wie aus der Fig. 2 weiterhin ersichtlich ist, liegt die Grenzlinie 25, wo die Breite B₂ gemessen wird, um einen Abstand A unterhalb der Schneidkante 15 bzw. der Schneidecke 11. Dieses Abstandsmaß A beträgt mindestens 20 % des Abstandes der Spanfläche 10 und der Auflagefläche 21.

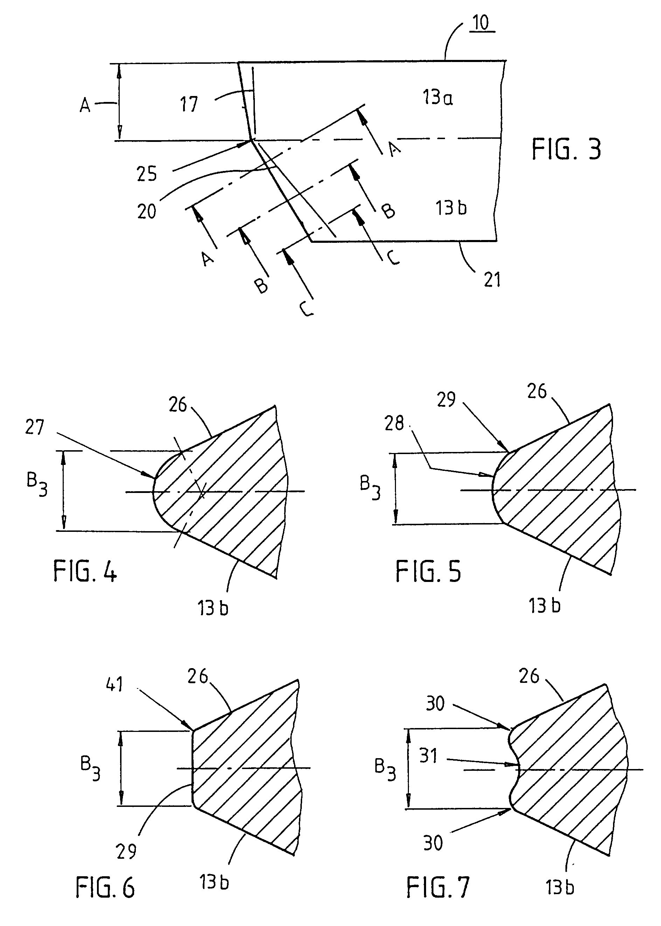

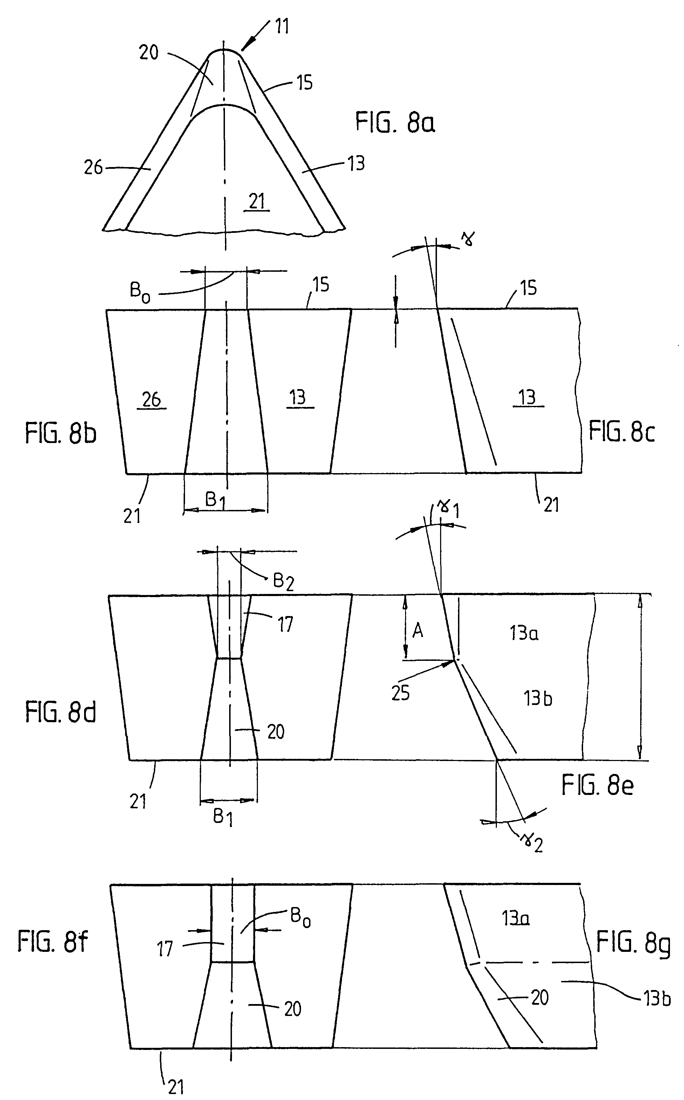

Fig. 4 bis 7 zeigen Schnitte entlang der Linien A - A, B - B oder C - C in Fig. 3, wobei es sich jeweils um kongruente Formen handelt, die sich nur durch ein zur Auflagefläche hin größer werdendes Breitenmaß B₂ zu B₁ unterscheiden. In Fig. 4 bis 7 wird etwa in Höhe des Schnittes A - A von einer einheitlichen Breite B₃ ausgegangen, die zwischen den vorgenannten Grenzwerten liegt. Diese Fig. verdeutlichen, welche Kantenform jeweils aneinandergrenzende untere Freiflächenabschnitte 13b und 26 aufweisen. Der Übergangsbereich entspricht dem Bereich 20 nach Fig. 1 oder 2. Im Falle der Fig. 4 besitzt der Übergangsbereich einen konstanten Eckenradius 27, der tangierend in die anschließenden Freiflächenbereiche 26 und 13b übergeht. In Fig. 5 ist dargestellt, daß der konstante Radius 28 auch über eine abgerundete Kante 29 in die Freiflächenbereiche 26 und 13b übergehen kann; der betreffende Kantenradius 28 bildet somit zur Grenze 29 jeweiligen Schnittkanten. Fig. 6 zeigt eine Ausführungsform, bei dem der Übergangsbereich 29 aus einer Fase besteht. Wie aus Fig. 7 ersichtlich, kann der Übergangsbereich auch zwei seitliche konvexe Rundungen 30 und eine mittlere konkave Kantenrundung 31 aufweisen. Einheitlich ist bei allen diesen Übergangsbereich-Ausführungsformen, daß in dem an die Auflagefläche 21 angrenzenden Bereich die jeweilige Breite maximal wird, d.h., daß sich das Breitenmaß von Schnitt A - A zu C - C und schließlich zur unteren Grenzkante stetig vergrößert.

Fig. 8a zeigt eine Draufsicht auf die Auflagefläche 21 mit einem sich zur Schneidkante 15 bzw. Schneidecke 11 hin verjüngenden Übergangsbereich. Wie die betreffenden Abbildungen 8b und 8c verdeutlichen, kann die Erhöhung der Breite von einem Ausgangsmaß B₀ an der Schneidkante eine kontinuierliche Verbreiterung bis zum unteren Maß B₁ erfahren. Hierbei besitzt der Schneideinsatz jeweils ebene Freiflächen 13 und 26, unter einem Freiwinkel γ. Bei der in Fig. 8d dargestellten Ausführungsform, die etwa der Darstellung nach Fig. 1 bis 3 entspricht, verjüngt sich die Breite des oberen Teiles des übergangsbereiches 17 von einem Ausgangsmaß auf das dargestellte Maß B₂. Die Breite des sich anschließenden Übergangsbereiches 20 wächst bis zur Kante zur Auflagefläche 21 auf das Maß B₁ kontinuierlich an. Der Schneideinsatz besitzt jeweils zwei ebene übereinanderliegende Freiflächenbereiche 13a und 13b, wovon der obere Freiflächenbereich unter einem ersten Freiwinkel γ₁ und der untere Freiflächenbereich unter einem größeren Freiwinkel γ₂ angeordnet ist.

Entsprechend der Ausführungsform nach Fig. 8f und 8g, bei der die Höhe der Freiflächenabschnitte 13a und 13b etwa gleich groß ist, ist der Übergangsbereich 20 ebenfalls derart ausgebildet, daß sie kontinuierlich zur Auflagefläche 21 hin anwächst, jedoch ist die Breite B₀ in dem oberen Übergangsbereich 17, der an die Schneidecke 11 angrenzt, konstant.

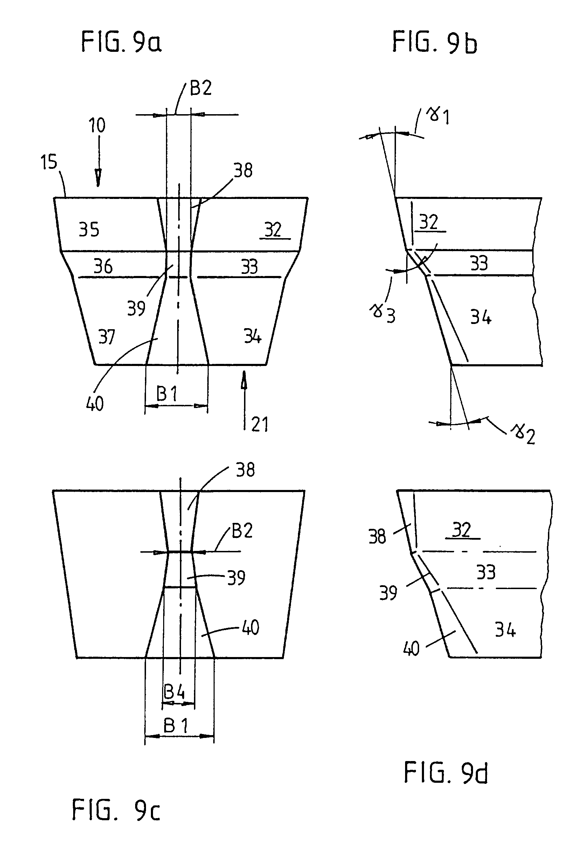

Fig. 9a bis 9d zeigen Abwandlungen des Schneideinsatzes mit drei übereinanderliegenden Freiflächenbereichen, die jeweils unter verschiedenen Spanwinkeln γ₁, γ₂ und γ₃ angeordnet sind. Die übereinanderliegenden Freiflächenbereiche 27 bis 29 bzw. 30 bis 32 bis 34 bzw. 35 bis 37 und die jeweiligen Übergangsbereiche 38, 39 und 40 schließen dergestalt aneinander an, daß der Freiwinkel γ₃ deutlich größer als die Freiwinkel γ₁ und γ₂ sind. Wie aus Fig. 9a und 9b ersichtlich, verringert sich die Breite Übergangsbereiches 38 von einem an die Schneidecke 11 angrenzenden größeren Maß auf eine Breite B₂, wie dies bereits zu Ausformungen nach Fig. 1 bis 3 beschrieben worden ist. Im hieran anschließenden Teil des Übergangsbereiches 39 bleibt jedoch die Breite über ein bestimmtes Maß konstant, ehe die Breite des übergangsbereiches 40 zur Auflagefläche 21 hin bis zu einem maximalen Wert zunimmt. Im Unterschied hierzu und Fig. 9c zu entnehmen, wächst die Breite des Übergangsbereiches 39 ausgehend von dem Maß B₂ kontinuierlich auf ein Maß B₄, während die Breite des Übergangsbereiches 40 von B₄ auf B₁ wächst. Hierbei wächst das Breitenmaß im Übergangsbereich 40 stärker als im Übergangsbereich 39, es liegt also keine kontinuierlich gleichbleibende Verbreiterung des Übergangsbereiches in Richtung der Auflagefläche vor, sondern eine nur streckenweise kontinuierliche Verbreiterung mit zwischenzeitlichen Stufen im Verbreiterungsgrad.

## Patentansprüche

1. Polygonaler Schneideinsatz mit einer Spanfläche (10), einer Auflagefläche (21) und einer Mehrzahl von Freiflächen (13, 14, 26, 32 bis 37), die zusammen mit der Spanfläche (10), Schneidkanten (15) und abgerundete und/oder gefaste Schneidecken (11, 12) bilden, unterhalb denen die dort aneinandergrenzenden Freiflächenbereiche über eine der Schneideckenkontur entsprechende Kontur aneinandergrenzen,
**dadurch gekennzeichnet,**
**daß** der Übergangsbereich (17, 20, 38 bis 40) zwischen zwei aneinandergrenzenden Freiflächen im an die Auflagefläche (21) angrenzenden Bereich zumindest gegenüber der Breite (B₂) darüberliegender Bereiche eine maximale Breite (B₁) aufweist.

2. Polygonaler Schneideinsatz nach Anspruch 1, **dadurch gekennzeichnet, daß** die Breite des Übergangsbereiches (20) von der Spanfläche (10) zu der Auflagenfläche (21) hin kontinuierlich zunimmt oder daß die Breite des Übergangsbereiches (17, 20, 38 bis 40) unterhalb eines Abstandes (A) von mindestens 20 % der Schneideinsatzhöhe von der Schneidkante (15) zur Auflagefläche hin kontinuierlich und/oder stufenweise zunimmt, wobei vorzugsweise die Breite des Übergangsbereiches (17, 20, 38 bis 40) von der Spanfläche (10) zur Auflagefläche (21) zunächst konstant ist oder kleiner wird und daran anschließend kontinuierlich und/oder stufenweise zunimmt.

3. Polygonaler Schneideinsatz nach Anspruch 1 oder 2, **dadurch gekennzeichnet, daß** die Breite des Übergangsbereiches (17, 20, 38 bis 40) unterhalb eines Abstandes (A) von 2,0 bis 2,5 mm von der Schneideckenkante (15) zur Auflagefläche (21) hin zunimmt und/oder daß die maximale Breite (B₁) 1,1 bis 3mal, vorzugsweise 1,1 bis 1,8mal so groß wie die minimale Breite (B₂) des übergangsbereiches ist.

4. Polygonaler Schneideinsatz nach einem der Ansprüche 1 bis 3, **dadurch gekennzeichnet, daß** der Übergangsbereich in einem Querschnitt senkrecht zur Freifläche eine Querschnittsrundung mit konstantem Radius (27, 28) aufweist, wobei die Querschnittsrundung (27) vorzugsweise in einem Querschnitt senkrecht zur Freifläche tangential in die ebenen angrenzenden Freiflächenbereiche (13b, 26) oder diese schneidend, vorzugsweise unter Bildung eines kleineren Querschnittsradius (29), übergeht.

5. Polygonaler Schneideinsatz nach einem der Ansprüche 1 bis 3, **dadurch gekennzeichnet, daß** der Übergangsbereich im wesentlichen aus einer Fase (29) besteht, die vorzugsweise an der Grenzfläche (41) zur ebenen Freifläche (13b, 26) abgerundet ist.

6. Polygonaler Schneideinsatz nach einem der Ansprüche 1 bis 5, **dadurch gekennzeichnet, daß** der Übergangsbereich im Querschnitt aus seitlichen konvexen (30) und einer mittigen konkaven (31) Rundung besteht.

7. Polygonaler Schneideinsatz nach einem der Ansprüche 1 bis 6, **dadurch gekennzeichnet, daß** die Freifläche (13a, 13b, 32 bis 37) und/oder der Übergangsbereich (17, 20, 38 bis 40) zwischen zwei Freiflächen aus zwei oder mehr aneinandergrenzenden parallel zur Schneidkante (15) und/oder Auflagefläche (21) verlaufenden Abschnitten besteht, die unter verschiedenen Freiwinkeln (γ₁, γ₂, γ₃) angeordnet sind, wobei die Freiwinkel (γ₁, γ₂, γ₃) vorzugsweise zwischen 5° und 40° liegen und/oder der an die Schneidkante (15) angrenzende Freiwinkel (γ₁) zwischen 5° und 10° und der an die Auflagefläche angrenzende Freiwinkel (γ₂) 10° bis 20° beträgt.

8. Polygonaler Schneideinsatz nach Anspruch 7, **dadurch gekennzeichnet, daß** die Freiwinkel (γ₃) des mittleren Freiflächen- und/oder Übergangsbereiches zwischen 20° und 45° liegen.

9. Polygonaler Schneideinsatz nach einem der Ansprüche 1 bis 8, **dadurch gekennzeichnet, daß** mindestens eine Schneidecke (11) spitzwinklig, vorzugsweise unter einem Eckenwinkel ≤80° ausgebildet ist.

10. Polygonaler Schneideinsatz nach einem der Ansprüche 1 bis 9, **dadurch gekennzeichnet, daß** auf der Spanfläche (10) Spanformnuten (22), an die Schneidkante (15) angrenzende Fasen und/oder erhabene Spanformelemente (23, 24), vorzugsweise rippenförmige Spanformelemte angeordnet sind.

## Claims

1. Polygonal cutting insert with a rake face (10), a support face (21), and a plurality of clearance faces (13, 14, 26, 32 to 37) that together with the rake face (10) form cutting edges (15) and rounded or chamfered cutting corners (11, 12) below which the adjacent clearance face regions border one another over a shape corresponding to the cutting-corner shape,
**characterised in that**
the transition region (17, 20, 38 to 40) between two adjacent clearance faces has in a region adjacent the support face (21) a maximum width (B₁) at least relative to the width (B₂) of overlying regions.

2. Polygonal cutting insert according to claim 1, **characterised in that** the width of the transition region (20) increases continuously from the cutting face (10) to the support face (21) or that the width of the transition region (17, 20, 38 to 40) below a spacing (A) of at least 20 % of the cutting-insert height from the cutting edge (15) to the support face, increases continuously and/or step-wise, whereby preferably the width of the transition region (17, 20, 38 to 40) is at first constant or decreasing from the cutting face (10) to the support face (21) and following then increases continuously and/or step-wise.

3. Polygonal cutting insert according to claim 1 or 2, **characterised in that** the width of the transition region (17, 20, 38 to 40) increases below a spacing (A) of 2 to 2,5 mm from the cutting-corner edge (15) to the support face (21) and/or that the maximum width (B₁) is 1,1 to 3 times, preferably 1,1 to 1,8 times, as large as the minimum width (B₂) of the transition region.

4. Polygonal cutting insert according to one of the claims 1 to 3, **characterised in that** the transition region has a cross-section rounding with a constant radius (27, 28), whereby the cross-sectional rounding (27) preferably merges tangentially in the planar adjacent side-face regions (13b and 26) or intersects same, preferably while forming a smaller cross-sectional radius (29).

5. Polygonal cutting insert according to one of claims 1 to 3, **characterised in that** the transition region is substantially formed by a land (29) that is rounded off at the edge (41) to the planar side faces (13b and 26).

6. Polygonal cutting insert according to one of claims 1 to 5, **characterised in that** the transition region is formed in section as lateral convex parts (30) and a central concave (31) rounded part.

7. Polygonal cutting insert according to one of claims 1 to 6, **characterised in that** the side face (13a, 13b, 32 to 37) and/or the transition region (17, 20, 38 to 40) between two clearance faces is formed of two or more adjacent sections running parallel to the cutting edge (15) and/or to the support face (21) and that are arranged at different side angles (λ₁, λ₂, λ₃), whereby the clearance angles (λ₁, λ₂, λ₃) lie between 5° and/or the clearance angle (λ₁) adjacent the cutting edge (15) is between 5° and 10° and/or the clearance angle (λ₂) adjacent the support face is between 10° and 20°.

8. Polygonal cutting insert according to claim 7, **characterised in that** the clearance angle (λ₃) of the central clearance face and/or transition region lies between 20° and 45°.

9. Polygonal cutting insert according to one of claims 1 to 8, **characterised in that** at least one cutting corner (11) is formed as a sharp point, preferably with an apex angle ≤ 80°.

10. Polygonal cutting insert according to one of claims 1 to 9, **characterised in that** chip-shaping grooves (22), limiting lands on the cutting edge (15), and/or raised chip-shaping elements (23, 24), preferably ridge-shaped chip-shaping elements are provided in the rake face (10).

## Revendications

1. Insert de coupe polygonal avec une face de coupe (10), une face d'appui (21) et une multiplicité de faces de dépouille (13, 14, 26, 32 à 37) qui, conjointement avec la face de coupe (10), forment des tranchants (15) et des coins de coupe arrondis et/ou chanfreinés (11, 12) au-dessous desquels les zones de face de dépouille y adjacentes l'une à l'autre sont contiguës l'une à l'autre par un contour correspondant au contour du coin de coupe,
**caractérisé par le fait**
**que** la zone de transition (17, 20, 38 à 40) entre deux faces de dépouille adjacentes l'une à l'autre présente dans la zone contiguë à la face d'appui (21) une largeur maximale (B₁) au moins par rapport à la largeur (B₂) de zones situées là-dessus.

2. Insert de coupe polygonal selon la revendication 1, **caractérisé par le fait que** la largeur de la zone de transition (20) augmente continûment de la face de coupe (10) vers la face d'appui (21) ou que, au-dessous d'une distance (A) du tranchant (15) d'au moins 20 % de la hauteur de l'insert de coupe, la largeur de la zone de transition (17, 20, 38 à 40) augmente continûment et/ou graduellement vers la face d'appui, de préférence la largeur de la zone de transition (17, 20, 38 à 40) étant d'abord constante ou devenant plus petite de la face de coupe (10) vers la face d'appui (21) et augmentant ensuite continûment et/ou graduellement.

3. Insert de coupe polygonal selon la revendication 1 ou 2, **caractérisé par le fait que** la largeur de la zone de transition (17, 20, 38 à 40) augmente au-dessous d'une instance (A) de 2,0 à 2,5 mm du tranchant (15) vers la face d'appui (21) et/ou que la largeur maximale (B₁) est 1,1 à 3 fois, de préférence 1,1 à 1,8 fois la largeur minimale (B₂) de la zone de transition.

4. Insert de coupe polygonal selon l'une des revendications 1 à 3, **caractérisé par le fait que**, en une coupe transversale perpendiculaire à la face de dépouille, la zone de transition présente un arrondi de section avec un rayon constant (27, 28), l'arrondi de section (27) débouchant, de préférence en une coupe transversale perpendiculaire à la face de dépouille, tangentiellement dans les zones de face de dépouille (13b, 26) planes contiguës ou de manière à couper celles-ci, de préférence en formant un rayon de section (29) plus petit.

5. Insert de coupe polygonal selon l'une des revendications 1 à 3, **caractérisé par le fait que** la zone de transition se compose pour l'essentiel d'un chanfrein (29) qui est arrondi de préférence sur la surface limite (41) vers la face de dépouille plane (13b, 26).

6. Insert de coupe polygonal selon l'une des revendications 1 à 5, **caractérisé par le fait que** la zone de transition se compose en coupe transversale d'arrondis latéraux convexes (30) et d'un arrondi central concave (31).

7. Insert de coupe polygonal selon l'une des revendications 1 à 6, **caractérisé par le fait que** la face de dépouille (13a, 13b, 32 à 37) et/ou la zone de transition (17, 20, 38 à 40) entre deux faces de dépouille se compose de deux ou plusieurs sections contiguës l'une à l'autre qui s'étendent parallèlement au tranchant (15) et/ou à la surface d'appui (21) et qui sont disposées à des angles de dépouille différents (γ₁ γ₂, γ₃), les angles de dépouille (γ₁ γ₂, γ₃) étant compris de préférence entre 5° et 40° et/ou l'angle de dépouille (γ₁) qui est contigu au tranchant (15) étant compris entre 5° et 10° et l'angle de dépouille (γ₂) qui est contigu à la surface d'appui étant compris entre 10° et 20°.

8. Insert de coupe polygonal selon la revendication 7, **caractérisé par le fait que** les angles de dépouille (γ3) de la zone centrale de face de dépouille et/ou de la zone centrale de transition étant compris entre 20° et 45°.

9. Insert de coupe polygonal selon l'une des revendications 1 à 8, **caractérisé par le fait que** du moins un coin de coupe (11) est réalisé à angle aigu, de préférence sous un angle de pointe de l'outil ≤ 80°.

10. Insert de coupe polygonal selon l'une des revendications 1 à 9, **caractérisé par le fait que** des rainures à former le copeau (22), des chanfreins contigus au tranchant (15) et/ou des éléments élevés à former le copeau (23, 24), de préférence des éléments à former le copeau, ayant la forme de nervures, sont disposés sur la face de coupe (10).
